# EUROPEAN PATENT APPLICATION

(11) **EP 3 486 811 A1**
(43) Date of publication of application: **22.05.2019**
(21) Application number: 18194619.5
(22) Date of filing: 14.09.2018
(51) Int. Cl.: G06F 17/50, G06F 8/41

(54) **SIMULATION DEVICE, SIMULATION SYSTEM, SIMULATION METHOD AND SIMULATION PROGRAM**

(30) Priority: 13.11.2017 JP 2017218190
(71) Applicant: Renesas Electronics Corporation, 135-0061 Tokyo (JP)
(72) Inventor: NISHI, Hirofumi, Koutou-ku,, Tokyo 135-0061, (JP)
(74) Representative: Betten & Resch

(57) **Abstract**

To provide a simulation device, a simulation system, a simulation method, and a simulation program that can increase a simulation speed, a simulation device includes an analyzing unit that detects processing units of a simulation target model, which have no mutual dependence and are able to be processed in parallel, by using first trace information, a dividing unit that generates the processing units from the simulation target model and generates input information for the processing units from the first trace information, a plurality of second instruction set simulators that perform simulation in parallel with regard to the processing units by using the input information to generate second trace information, a confirming unit that compares the first trace information and the second trace information with each other to detect a match portion and a mismatch portion; and a combining unit that combines second trace information corresponding to the match portion in a time-series order.

## Description

### CROSS-REFERENCE TO RELATED APPLICATIONS

The disclosure of Japanese Patent Application No. 2017-218190 filed on November 13, 2017 including the specification, drawings and abstract is incorporated herein by reference in its entirety.

### BACKGROUND

The present invention relates to a simulation device, a simulation system, a simulation method, and a simulation program.

In development of techniques related to automobiles or the like, introduction of model based development (MBD) is proceeding in which simulation is performed by using a model that simulates a behavior of a product to be developed in the early stage of development in order to prevent occurrence of a problem in the later stage of development. In this development, a detailed analysis of a timing and performance is important for automobile control techniques, for example. However, in a current cycle accurate simulator, an execution speed is slower than in an actual chip by two or more orders of magnitude. Simulation in tens of seconds to minutes performed for engine start, traveling, and the like requires long execution time.

To deal with this problem, a simulation speed is improved by using a multicore model simulator that includes a plurality of threads and a plurality of core models that execute the threads, for example (see Japanese Unexamined Patent Application Publication No. 2006-293759) .

### SUMMARY

However, the invention described in Japanese Unexamined Patent Application Publication No. 2006-293759 is directed to a concurrent execution method based on presumption that dependence between processor elements PE0, PE1 and the like each of which is a unit of hardware, that is, dependence in which the processor element PE1 uses a processing result of the processor element PE0 is sparse. Therefore, if dependence between the processor elements PE0 and PE1 or between the same processor elements PE0 is dense, queuing occurs inside and increase of the simulation speed is difficult.

Therefore, a simulation device, a simulation system, a simulation method, and a simulation program that can increase a simulation speed are demanded.

Other objects and novel features will be apparent from the description of this specification and the accompanying drawings.

According to one embodiment, a plurality of processing units that have no mutual dependence and can be processed in parallel are generated from a simulation target model by using first trace information, input information for the processing units is generated from the first trace information, simulation is performed in parallel with regard to the processing units to generate second trace information, and a portion of the second trace information which matches with the first trace information is combined in a time-series order to obtain a simulation result.

According to the above-described embodiment, it is possible to provide a simulation device, a simulation system, a simulation method, and a simulation program that can increase a simulation speed.

### BRIEF DESCRIPTION OF THE DRAWINGS

FIG. 1 is an explanatory diagram of the outline of simulation according to a first embodiment.
FIG. 2 is a block diagram illustrating a schematic configuration of a simulation system 1 including a simulation device 10 according to the first embodiment.
FIG. 3 is a flowchart illustrating a procedure of a simulation method according to the first embodiment.
FIG. 4 is a flowchart illustrating a procedure of a synchronization analyzing process according to the first embodiment.
FIG. 5 is an explanatory diagram of the synchronization analyzing process according to the first embodiment.
FIG. 6 is a flowchart illustrating a procedure of a validation process according to the first embodiment.
FIG. 7 illustrates a schematic configuration of a simulation system 2 including the simulation device 10 according to the first embodiment.
FIG. 8 is a block diagram illustrating a schematic configuration of a model-based-development simulation system 100 according to the first embodiment.
FIG. 9 illustrates a schematic configuration of a simulation system 3 including a simulation device 70 according to a second embodiment.

### DETAILED DESCRIPTION

For clarifying explanation, omission and simplification are made in the following description and the drawings as appropriate. Each of elements illustrated in the drawings as functional blocks performing various processes can be configured by a CPU, a memory, or another circuit if being achieved by hardware, and can be implemented by a program loaded to a memory if being implemented by software.

Therefore, a person skilled in the art would understand that these functional blocks can be implemented by hardware only, software only, or a combination of hardware and software in various ways, and implementation of these elements is not limited to any of them. Throughout the drawings, the same element is labeled with the same reference sign, and redundant description is omitted as necessary.

The above-described program can be stored in various types of non-transitory computer-readable media to be supplied to the computer.

The non-transitory computer-readable media include various types of tangible storage media. Examples of the non-transitory computer-readable medium include a magnetic storage medium (for example, a flexible disk, a magnetic tape, and a hard disk drive), a magneto-optical storage medium (for example, a magneto-optical disk), a CD-ROM (Read Only Memory), a CD-R, a CD-R/W, and a semiconductor memory (for example, a mask ROM, a PROM (Programmable ROM), an EPROM (Erasable ROM), a flash ROM, and a RAM (Random Access Memory)).

Also, the program can be supplied to the computer by various types transitory computer-readable media. Examples of the transitory computer-readable medium include an electric signal, an optical signal, and an electromagnetic wave. The transitory computer-readable medium can supply the program to the computer via a wired communication path, such as an electric wire and an optical fiber, or a wireless communication path.

### First Embodiment

Next, a simulation device and a simulation method according to this first embodiment are described.

First, the reason why the simulation device and the simulation method according to this first embodiment can achieve high-speed simulation is described.

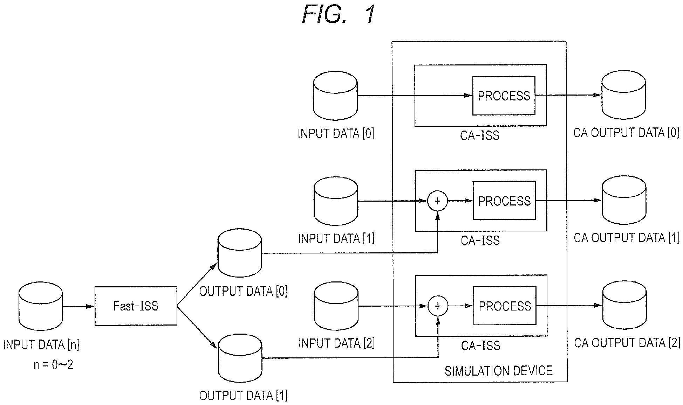

FIG. 1 is an explanatory diagram of the outline of simulation according to this first embodiment.

In a simulation system, a Fast-ISS (Instruction Set Simulator) that is a high-speed, low-accuracy functional simulator inputs input data [n] (n = 0 to 2 in this example), simulates a simulation target model, and outputs first trace information including output data [0] and output data [1]. Although the Fast-ISS is not essential in the simulation system or the simulation device according to this first embodiment as will be described later, the Fast-ISS can be included as one component.

The simulation device divides the simulation target model into a plurality of divided models based on the first trace information. Each divided model includes at least one of a plurality of simulation processing units that have no mutual dependence. By preparing the divided models, input data [0] to input data [2] for the divided models, and the output data [0] and the output data [1] that are a result of functional simulation and are also input data (input information) for the divided models in this manner, it is possible to perform subsequent low-speed, high-accuracy simulation in parallel.

Thereafter, a plurality of CA (Cycle Accurate)-ISSs, each of which is a low-speed, high-accuracy simulator, input the input data [0] to [2] and the output data [0] and [1] and perform simulation for the divided models in parallel, so that timing information in the simulation target model can be calculated and high-speed simulation can be achieved.

To achieve such simulation, the simulation device according to this first embodiment includes the configuration described below.

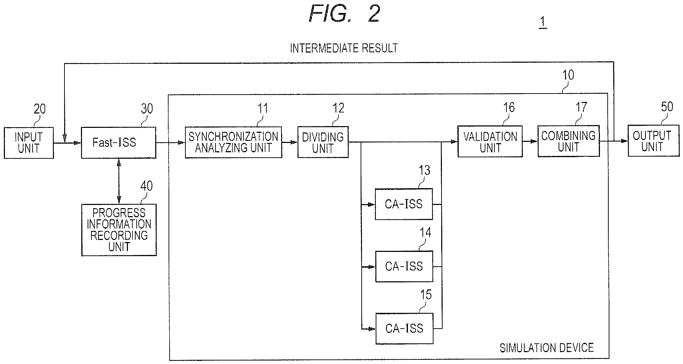

FIG. 2 is a block diagram illustrating a schematic configuration of a simulation system 1 including a simulation device 10 according to this first embodiment.

The simulation system 1 includes the simulation device 10, an input unit 20, a first instruction set simulator 30, a progress information recording unit 40, and an output unit 50. These components can be achieved on a computer, such as a personal computer or a server.

The input unit 20 inputs input data, for example, a memory image of a simulation execution program, a parameter, and an instruction from a user, and outputs the input data to the first instruction set simulator 30.

The first instruction set simulator 30 inputs the input data, performs functional simulation, and outputs first trace information including a simulation result, for example, memory data and a register value, to the simulation device 10.

The first instruction set simulator 30 is a Fast-ISS and can perform an operation at a high speed of about 200 MIPS that is close to an operating speed of an actual chip. However, the first instruction set simulator 30 cannot evaluate accurate performance or an accurate timing, because cycle accurate simulation is simplified or omitted. Therefore, in the first trace information, an accurate number of cycles, for example, a processing time, is not included or is not much.

The progress information recording unit 40 is also called a time machine or a snap shot in general, and records progress information and outputs it to the simulation device 10. The progress information described here includes information on a state of a register and a memory of the Fast-ISS 30, and also includes information for storing that state and recovering (resuming from a time at which the state is stored).

The progress information recording unit 40 can record first trace information as the progress information. By storing the first trace information, it is possible to omit at least a portion of re-execution of simulation by the Fast-ISS 30 described later.

The simulation device 10 inputs first trace information, generates input data (input information) for simulation, performs cycle accurate simulation by using the generated input data, and outputs a simulation result, for example, second trance information and memory data of an execution result, as output data to the output unit 50. The second trace information includes more timing information such as the number of cycles, than the first trace information.

Also, the simulation device 10 feeds back a portion of the output data to the Fast-ISS 30 as an intermediate result of simulation.

The simulation device 10 can use progress information in addition to first trace information output from the Fast-ISS 30 or in place of the first trace information.

The details of the simulation device 10 will be described later.

The output unit 50 outputs the above-described output data to outside of the simulation system 1.

The simulation device 10 includes a synchronization analyzing unit 11, a dividing unit 12, a plurality of second instruction set simulators 13 to 15, a validation unit 16, and a combining unit 17. The number of the second instruction set simulators is not limited to three.

The synchronization analyzing unit 11 inputs first trace information from the Fast-ISS 30 or the like, analyzes dependence between a plurality of processes in a program flow of a simulation target model, detect a plurality of processing units that can be processed in parallel, and outputs position information of a dividing point for dividing the simulation target model into those processing units to the dividing unit 12. The synchronization analyzing unit 11 also outputs the input first trace information to the dividing unit 12 and the validation unit 16 as it is.

The synchronization analyzing unit 11 separately inputs CA-ISS setting parameters, for example, memory data, the number of cycles, and configuration information required for running of the second instruction set simulators 13 to 15, and outputs them to the second instruction set simulators 13 to 15 via the dividing unit 12.

In the simulation device 10, the Fast-ISS 30 can further have a synchronization analyzing function in addition to the synchronization analyzing function of the synchronization analyzing unit 11. Further, instead of including the synchronization analyzing unit 11 in the simulation device 10, the Fast-ISS 30 can have the synchronization analyzing function.

The dividing unit 12 divides the simulation target model into a plurality of divided models that are not mutually dependent based on the position information of the dividing point, and outputs them to the second instruction set simulators 13 to 15. Each divided model includes at least one processing unit of the simulation target model.

The dividing unit 12 also generates input data for each divided model from the first trace information, and outputs the generated input data to the second instruction set simulators 13 to 15.

The second instruction set simulators 13 to 15 perform cycle accurate simulation in parallel by using information on the divided models and the input data, for example, and outputs second trace information including information related to a timing, for example, the number of execution cycles, to the validation unit 16.

In this example, each of the second instruction set simulators 13 to 15 is a CA-ISS and is a low-speed, high-accuracy cycle accurate simulator. It operates at a low speed of several MIPS to several KIPS and can evaluate performance and a timing.

The CA-ISSs 13 to 15 can input the input data, for example, a memory image of an execution program, a parameter of simulation, and an instruction from a user, directly from the input unit 20.

The validation unit 16 determines whether the first trace information output from the Fast-ISS 30 and the second trace information output from the CA-ISSs 13 to 15 match with each other, and outputs whether there is a mismatch and information on a timing of the mismatch to the combining unit 17. Further, when a portion in which the first trace information and the second trace information do not match with each other is found, the validation unit 16 stops a validation process once.

The combining unit 17 combines the second trace information in a portion where it matches with the first trace information or the second trace information before a portion of a mismatch in a time-series order to obtain a simulation result of the CA-ISSs 13 to 15. The combining unit 17 also feeds back the first trace information and the second trace information in the above-described portion of the mismatch, timing information of an interrupt, and the like to the Fast-ISS 30 as an intermediate result.

The Fast-ISS 30 then inputs the above-described intermediate result, and the Fast-ISS 30, the synchronization analyzing unit 11, the dividing unit 12, the CA-ISSs 13 to 15, the validation unit 16, and the combining unit 17 repeat processes until the above-described mismatch portion is eliminated. Thereafter, the simulation system 1 outputs the second trace information combined by the combining unit 17 to the output unit 50 as a simulation result.

With this configuration, the simulation device 10 according to this first embodiment can achieve high-speed simulation.

Next, an operation of the simulation device 10, that is, a simulation method according to this first embodiment is described specifically.

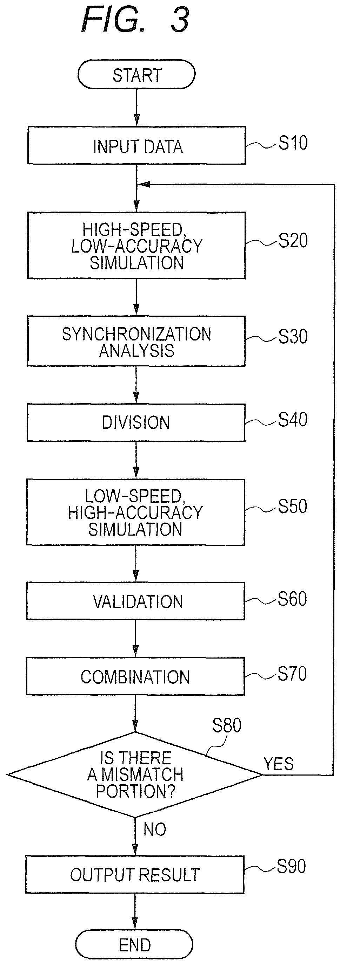

FIG. 3 is a flowchart illustrating a procedure of the simulation method according to this first embodiment.

When the simulation system 1 starts to operate, the input unit 20 inputs input data, for example, a memory image of an execution program, a simulation parameter, and an instruction from a user (Step S10).

Then, the Fast-ISS 30 performs high-speed, low-accuracy functional simulation for a simulation target model by using the input data and calculates first trace information (Step S20). This functional simulation can be the same as that in a related technique. Further, although Steps S10 and S20 are not essential in the simulation method according to this first embodiment, Steps S10 and S20 can be included in the procedure.

Subsequently, the synchronization analyzing unit 11 analyzes dependence between a plurality of processing units of the simulation target model and calculates position information of a dividing point for dividing the simulation target model into the processing units (Step S30) .

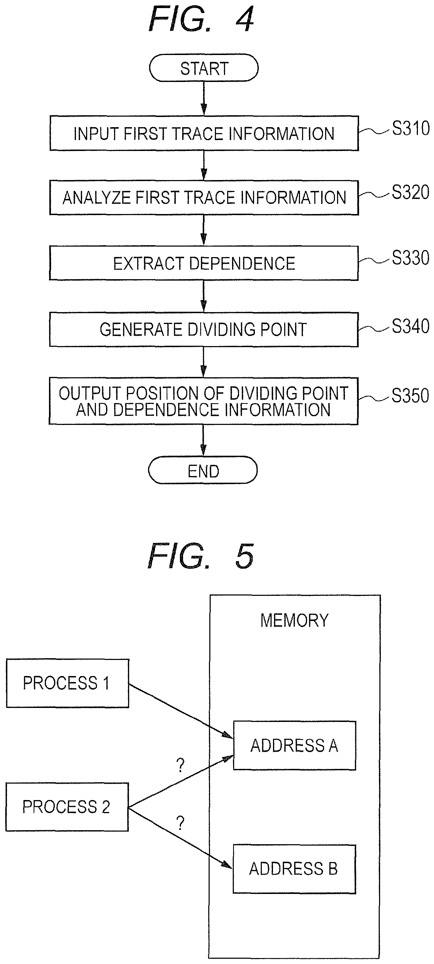

FIG. 4 is a flowchart illustrating a procedure of a synchronization analyzing process according to this first embodiment. The synchronization analyzing process in Step S30 includes Steps S310 to S350 (note that Step S30 is not followed by Steps S310 to S350).

When inputting first trace information (Step S310), the synchronization analyzing unit 11 analyzes resource access information and instruction information included in the first trace information, for example, an address value of a memory, the number of a register, and the like (Step S320), and extracts dependence that is present when a program of a simulation target model is executed (an access to the same resource, start, break, and end of a process, and the like) (Step S330). In this analysis, if an access to the same resource is not included in certain two sections (processing units), these processing units can be executed concurrently.

FIG. 5 is an explanatory diagram of the synchronization analyzing process according to this first embodiment.

The synchronization analyzing unit 11 monitors whether a process 1 and a process 2 that are candidates of processing units access to the same address in a memory in a predetermined simulation time period, for example, one second. For example, if the process 1 and the process 2 access the same address A in a time period α, the process 1 and the process 2 cannot be handled as separate processing units with regard to that time period α.

Meanwhile, if the process 1 accesses the address A and the process 2 accesses an address B in a time period β, and the process 1 and the process 2 do not access the same address, then the process 1 and the process 2 can be handled as separate processing units with regard to that time period β. Even in a case where there are processes 3, 4, 5, ... in addition to the processes 1 and 2, the same can be applied.

Further, the synchronization analyzing unit 11 can use a start point, a break point, and an end point of a process as a start point and an end point of a processing unit.

The synchronization analyzing unit 11 generates a dividing point for performing division into a plurality of processing units that can be processed concurrently from these analyzing results (Step S340), and outputs position information of the dividing point and dependence information of the processing units to the dividing unit 12 (Step S350) .

The synchronization analyzing unit 11 can also determine not to perform division with regard to a certain process, a certain time period, or the like, in a case where it is determined with regard to the certain process, the certain time period, or the like that such division makes overhead larger than a predetermined value.

Further, the synchronization analyzing unit 11 can additionally input information of hint for synchronization analysis from a build tool, a compiler, an OS, user information, and the like.

For example, the synchronization analyzing unit 11 extracts a process that interferes with a process of another processor element as hint information from description of a source code, and uses it for analysis of a divided section. In general, a specific function or instruction is used for a processing request to another processor element and exclusive control of a shared resource. Well-known examples are Pthreads API functions, "pthread_create" and "pthread_mutex_lock".

These functions interfere with start of a new process or a process of another processor element. Therefore, by using these functions as a start point or an end point of a divided section, it is possible to reduce interference with another execution section in that divided section. Due to this, it is possible to make a difference between a result of functional simulation and a result of cycle accurate simulation hardly occur, thereby reducing re-execution of simulation when a mismatch occurs and improving a simulation speed.

In addition, an interrupt and an exception handler that are processes unique to an embedded system and a specific function specified by a user can be also hint information because each of them is a trigger of start of a new process. Also, state information, for example, an idle state and a standby state, of an OS and a CPU can be hint information.

In this case, the synchronization analyzing unit 11 can only perform analysis based on hint information, in order to prevent synchronization analysis from taking long time. The synchronization analyzing unit 11 can also include another mode that lowers a load due to analysis while allowing increase of a probability of re-execution of simulation to a certain degree, for example, a mode in which re-execution of simulation is selected in a validation process as will be described later, when the order of execution of a memory access, an interrupt, and the like is changed from the process contents of simulation that is originally expected, that is, when a program flow is changed.

Further, because some simulation, e.g., an embedded system, continues to operate, the synchronization analyzing unit 11 can start a process without waiting for completion of the entire process of the Fast-ISS 30, when the process of the Fast-ISS 30 has progressed to a certain degree, for example, when a plurality of instructions have been processed. That is, simulation by the Fast-ISS 30 and the processes of the synchronization analyzing unit 11 and subsequent components, that is, simulation by the simulation device 10 can progress concurrently for different processes as targets.

Subsequently, the dividing unit 12 uses the position information of the dividing point to divide the simulation target model into a plurality of divided models, and generates input data for each divided model, that is, execution information that is an input value to a register, a memory, and the like based on first trace information and a program code of the simulation target model (Step S40).

In this step, the dividing unit 12 can adaptively adjust the maximum length of each processing unit based on specification by a user, an execution speed of a simulator, a frequency of re-execution, or the like. As the processing unit is longer, penalties of start/end associated therewith are reduced and a simulation speed can be increased. However, a penalty due to re-execution when a difference between first trace information and second trace information occurs increases.

Furthermore, the dividing unit 12 can generate information corresponding to output data of each divided model from the first trace information. That information is used in a validation process that will be described later.

Subsequently, each of the CA-ISSs 13 to 15 that are in a parallel relation inputs setting information, the above-described execution information, and, if necessary, the first trace information to a corresponding divided model, performs simulation, and generates second trace information (Step S50). The second trace information includes a log of execution of an instruction indicating when, by which, and which value is written to a memory, for example.

The CA-ISSs 13 to 15 perform low-speed, high-accuracy cycle accurate simulation that is the same as that in a related art. That is, simulation itself is the same as simulation achieved by giving an input to a known CA-ISS individually. Further, although the number of concurrent execution depends on an execution resource of a simulator, it can be also specified by a user. As an execution program of each of the CA-ISSs 13 to 15, an execution program used in the Fast-ISS 30 can be input from the Fast-ISS 30 as it is, or an execution program of a portion required by each divided model can be input from a memory.

Subsequently, the validation unit 16 confirms whether the second trace information that is a result of simulation by the CA-ISSs 13 to 15 and the first trace information (or information generated from the first trace information in the dividing unit 12, which corresponds to output data of each divided model) match with each other, and generates information indicating presence or absence of a mismatch and information on a timing of the mismatch (Step S60).

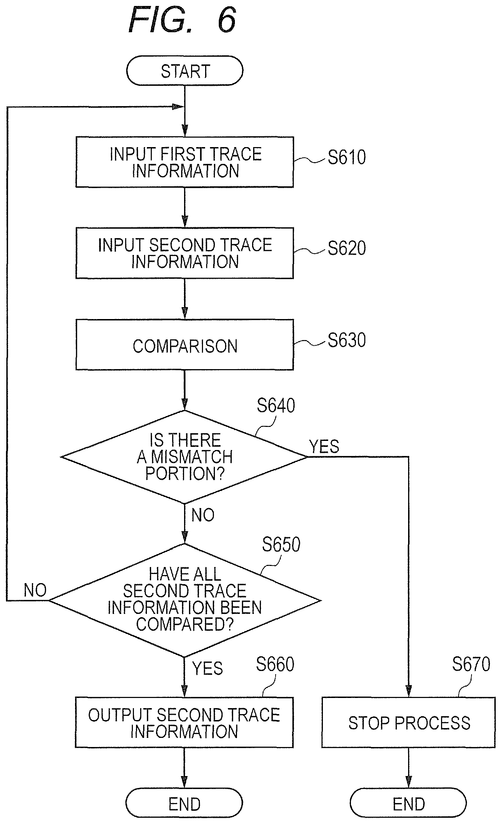

FIG. 6 is a flowchart illustrating a procedure of a validation process according to this first embodiment. The validation process in Step S60 includes Steps S610 to S670 (note that Step S60 is not followed by Steps S610 to S670).

When inputting first trace information and second trace information (Steps S610 and S620), the validation unit 16 compares a value of a resource in the second trace information from which timing information (the number of cycles) is removed with a value of a resource in the first trace information (Step S630). In this comparison, the validation unit 16 detects a difference between an execution order or a timing of an event in the CA-ISSs 13 to 15, into which a cycle accuracy is considered, and an execution order or a timing of an event in the Fast-ISS 30. With regard to the different portion, output data (input data to the CA-ISSs 13 to 15) generated by the Fast-ISS 30 may affect output data calculated by the CA-ISSs 13 to 15.

Therefore, the validation unit 16 determines whether there is a mismatch portion between the second trace information and the first trace information (Step S640) . When there is no mismatch portion (NO in Step S640), the validation unit 16 determines whether all the second trace information is compared with the first trace information (Step S650). When all the second trace information has not been compared (NO in Step S650), the process returns to Step S610. When all the second trace information has been compared (YES in Step S650), the validation unit 16 outputs all the second trace information to the combining unit 17 and ends the process (Step S660).

When there is a mismatch portion (YES in Step S640), the validation unit 16 outputs information on a timing of the mismatch, for example, to the combining unit 17 and ends the process (Step S670) .

Subsequently, the combining unit 17 combines a result of cycle accurate simulation of the above-described match portion in a time-series order (Step S70). Also when there is a mismatch portion in the validation process (Step S60), the combining unit 17 combines a result of cycle accurate simulation of a match portion before the mismatch portion in a time-series order.

The combining unit 17 then determines whether there is a mismatch portion in the validation process in Step S60 (Step S80) . When there is a mismatch portion (YES in Step S80), the combining unit 17 outputs timing information of an interrupt, an execution log at a timing of the mismatch, and the like to the Fast-ISS 30 in order to cause the Fast-ISS 30 and the CA-ISSs 13 to 15 to perform simulation for the mismatch portion and its subsequent portions again.

The simulation method according to this first embodiment repeats the processes in Steps S20 to S80 to eliminate a mismatch portion. In this repeat, the processes for the mismatch portion and its subsequent portions can be resumed by using the above-described progress information.

Meanwhile, when there is no mismatch portion in the validation process in Step S60 (NO in Step S80), the combining unit 17 outputs a result of cycle accurate simulation, for example, information on the number of cycles, combined in Step S70 to the output unit 50, and the output unit 50 outputs a result to outside (Step S90) . Simulation is ended with this output.

The result of simulation by the simulation device 10 according to this first embodiment is the same as a result of simulation by a single CA-ISS.

In simulation by the Fast-ISS 30 according to this first embodiment, a timing is not accurate. Therefore, it is possible to allow a process to progress until an external interrupt occurs during execution of simulation by the CA-ISSs 13 to 15, and to execute simulation by the Fast-ISS 30 again from a time of occurrence of the interrupt. Also in a case where an internal interrupt by a model inside a simulator or the like occurs, the same procedure can be applied basically. However, it suffices that simulation is executed by using that internal model without specification from the outside.

In addition, the simulation device 10 according to this first embodiment can be designed in such a manner that, when it is found that an interrupt that is not present in an original simulation target model is newly added to change the contents of a process, simulation is executed again from a point of that change.

Furthermore, in the simulation device 10 according to this first embodiment, the validation unit 16 compares first trace information and second trace information with each other to validate the second trace information. However, when divided sections have no dependence with regard to processing contents of a simulation target and there is no operation affecting the processing contents, for example, an interrupt such as a timer interrupt, a validation process by the validation unit 16 can be omitted and the combining unit 17 can combine the second trace information to create a simulation result.

In addition, the Fast-ISS 30 is not essential in the simulation system according to this first embodiment, as described above.

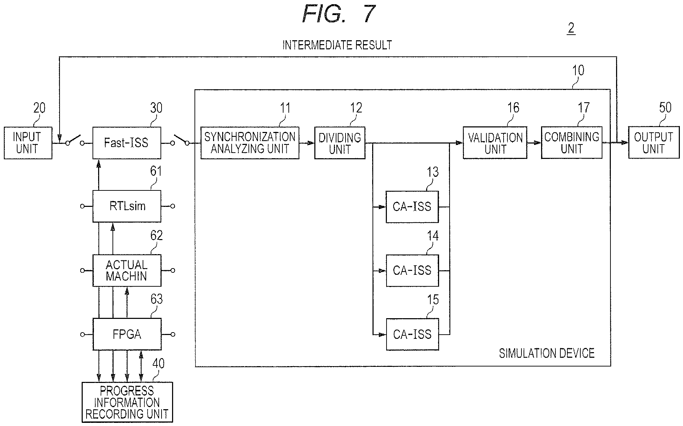

FIG. 7 illustrates a schematic configuration of a simulation system 2 according to this first embodiment. The simulation system 2 corresponds to a modification of the simulation system 1. The simulation device 10, the input unit 20, the Fast-ISS 30, the progress information recording unit 40, and the output unit 50 of the simulation system 2 can be the same as those of the simulation system 1, and the detailed description is omitted here.

The simulation system 2 further includes an RTL (Register Transfer Level) simulator 61, an actual machine (actual chip) 62 on which a simulation target model is based (which corresponds to the simulation target model), and an FPGA (Field Programmable Gate Array) 63, and is configured in such a manner that the Fast-ISS 30, the RTL simulator 61, the actual machine 62, and the FPGA 63 can be switched by a switch. These components are common in that they generate first trace information, and are used depending on a user's use environment, a past use record, or the like.

In a case of using the actual chip 62 or the FPGA 63, progress information can be input from the progress information recording unit 40 by a scan chain to place simulation in a specific state.

With this configuration, the simulation system 2 can achieve high-speed simulation, as with the simulation system 1.

In a case of using the simulation device 10 according to this first embodiment as a tool for model based development, communication between the CA-ISSs 13 to 15 and another tool outside the simulation device 10 may be required. In this case, it is preferable that the simulation device 10 includes, as input for the MBD tool, an input interface that enables input of a timing, a type, and the like of an interrupt event or transmitted/received data from a GUI, a list, or another connection tool.

Here, an overall configuration of a model-based-development simulation system is briefly described.

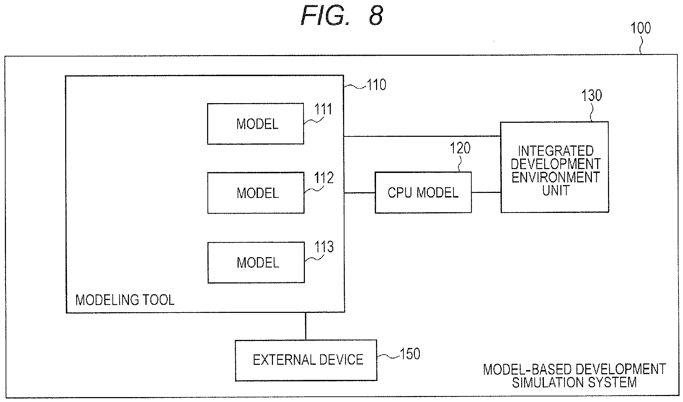

FIG. 8 is a block diagram illustrating a schematic configuration of a model-based-development simulation system 100 according to the first embodiment.

The simulation system 100 includes a modeling tool 110, a CPU model 120, and an integrated development environment unit 130 in a MILS (Model In Loop Simulator) environment.
The simulation system 100 can be configured by a personal computer, for example. Also, the simulation system 100 is further connected to an external device 150 in a HILS (Hardware In Loop Simulator) environment.

The modeling tool 110 is MATLAB (registered trademark) that is numeric calculation software developed by The MathWorks, Inc. in U. S .A., for example, and includes simulation target models 111, 112, and 113. Each of the simulation target models 111, 112, and 113 is a model for constructing a system, which is other than the CPU model 120 described next, and is a model of an ECU for automobile or a model of a vehicle, for example.

The simulation system 100 can use a plurality of modeling tools in combination for some contents of modeling.

The CPU model 120 is the simulation system 1 or 2 according to this first embodiment. The simulation system 1 or 2 includes the simulation device 10. The CPU model 120 may be incorporated in the modeling tool 110.

The integrated development environment unit 130 includes a debugger, a GUI, and a compiler, for example, and performs control of a CPU and debugging.

The external device 150 is a hardware component or a measuring instrument, for example, and is used for simulation of connection between a model and an actual hardware component.

In this manner, the simulation device 10 according to this first embodiment is used in the model-based development simulation system 100, for example, and can increase a speed of model-based development simulation.

As described above, the simulation device 10 according to this first embodiment includes the first instruction set simulator 30 that generates first trace information, the analyzing unit 11 that detects processing units in a simulation target model by using the first trace information, the processing units having no mutual dependence and being able to be processed in parallel, the dividing unit 12 that generates a plurality of processing units from the simulation target model and generates input information for the processing units from the first trace information, a plurality of cycle accurate second instruction set simulators 13 to 15 that perform simulation with regard to the processing units by using the input information in parallel to generate second trace information that includes more timing information than the first trace information, the confirming unit 16 that compares the first trace information and the second trace information with each other to detect a match portion and a mismatch portion, and the combining unit 17 that combines the second trace information corresponding to the match portion in a time-series order.

Further, it is preferable that the simulation device 10 according to this first embodiment includes a first trace information generating unit that is provided in place of the first instruction set simulator 30 and generates the first trace information, and the recording unit 40 that records the first trace information, the first trace information generating unit is the actual machine 62 or the FPGA 63 corresponding to the simulation target model, and the actual machine 62 or the FPGA 63 input the first trace information via a scan chain from the progress information recording unit 40.

Further, in the simulation device 10 according to this first embodiment, it is preferable that the confirming unit 16 stops a process of detecting the match portion and the mismatch portion when detecting the mismatch portion, and the first instruction set simulator 30 or the first trace information generating unit generates anew the first trace information after the mismatch portion based on the second trace information.

Further, in the simulation device 10 according to this first embodiment, it is preferable that the analyzing unit 11 detects the processing units that are able to be processed in parallel, by using a source code of the simulation target model in addition to the first trace information or in place of the first trace information.

Further, in the simulation device 10 according to this first embodiment, it is preferable that the combining unit 17 outputs the second trace information combined in a time-series order when the first trace information and the second trace information match with each other, as a simulation result.

The simulation system 100 according to this first embodiment includes the simulation device 10, the modeling tool 110 that creates a simulation target model, and the integrated development environment unit 130 that performs control of the simulation device 10 or debugging.

In addition, a simulation method according to this first embodiment includes a first simulation step S20 of generating first trace information, an analyzing step S30 of detecting processing units in a simulation target model by using the first trace information, the processing units having no mutual dependence and being able to be processed in parallel, a dividing step S40 of generating a plurality of processing units from the simulation target model and generating input information to the processing units from the first trace information, a second simulation step S50 of performing simulation with regard to the processing units by using the input information in parallel to generate second trace information, a confirming step S60 of comparing the first trace information and the second trace information with each other to detect a match portion and a mismatch portion, and a combining step S70 of combining the second trace information corresponding to the match portion in a time-series order.

Furthermore, in the simulation method according to this first embodiment, it is preferable that the confirming step S60 stops a process when detecting the mismatch portion, and the first simulation step S20, the analyzing step S30, the dividing step S40, the second simulation step S50, the confirming step S60, and the combining step S70 are performed again with regard to a processing unit after the mismatch portion by using the second trace information.

### Second Embodiment

While the simulation device 10 according to the first embodiment performs cycle accurate simulation in parallel by using a result of functional simulation to improve a simulation speed, a simulation device according to this second embodiment omits the cycle accurate simulation with regard to a processing unit for which the result of the functional simulation is enough and a processing unit for which the functional simulation has not been performed, thereby further improving the simulation speed.

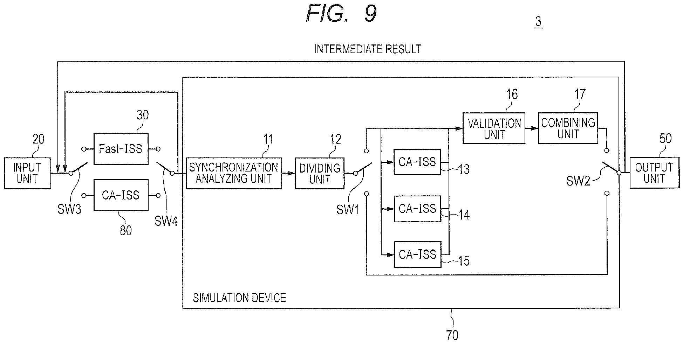

FIG. 9 illustrates a schematic configuration of a simulation system 3 including a simulation device 70 according to this second embodiment.

The simulation system 3 includes the simulation device 70, a third instruction set simulator (CA-ISS) 80, and switches SW3 and SW4, in addition to the input unit 20, the Fast-ISS 30, and the output unit 50 that are the same as those of the simulation system 1. The simulation system 3 can further include a progress information recording unit.

The simulation device 70 includes the synchronization analyzing unit 11, the dividing unit 12, the CA-ISSs 13 to 15, the validation unit 16, and the combining unit 17 that are the same as those of the simulation device 10, and further includes switches SW1 and SW2 for outputting output data of the dividing unit 12 directly to the output unit 50.

In this configuration, the synchronization analyzing unit 11 inputs first trace information to the combining unit 17 via the dividing unit 12 and the validation unit 16 as it is, with regard to a processing unit of a simulation target model for which it is determined that a result of functional simulation is enough or cycle accurate simulation is not necessary as a result of analysis of the first trace information. With regard to this processing unit, cycle accurate simulation has not been performed. Therefore, a validation process is not necessary, and it is possible to combine the first trace information and the second trace information with each other in the combining unit 17 to obtain a simulation result.

Further, the synchronization analyzing unit 11 switches the switches SW1 and SW2 to enable omission of cycle accurate simulation, a validation process, and a combining process with regard to a processing unit for which it is determined that the functional simulation has not been performed because that processing unit is an unnecessary function, as a result of analysis of information, for example, an unused resource and information indicating presence or absence of dependency in the first trace information.

In order for the synchronization analyzing unit 11 to determine that these processes can be omitted, the first trace information can additionally include information on an unused resource, for example, unused branch prediction or an instruction cache.

As described above, in the simulation device 70 according to this second embodiment, it is preferable that the analyzing unit 11 further detects a processing unit for which simulation by the second instruction set simulators 13 to 15 is not necessary, and the combining unit 17 combines first trace information of that processing unit and second trace information with each other in a time-series order.

Further, in the simulation device 70 according to this second embodiment, it is preferable that the analyzing unit 11 further detects a processing unit for which simulation by the second instruction set simulators 13 to 15 is not necessary, and the second instruction set simulators 13 to 15, the confirming unit 16, and the combining unit 17 do not perform processes with regard to that processing unit.

In the above, the invention made by the inventors of the present application has been specifically described by way of the embodiments. However, it is naturally understood that the present invention is not limited to the aforementioned embodiments, and can be changed in various ways within the scope not departing from the gist thereof.

## Claims

1. A simulation device comprising:
a first instruction set simulator that generates first trace information;
an analyzing unit that detects processing units of a simulation target model, which have no mutual dependence and are able to be processed in parallel, by using the first trace information;
a dividing unit that generates the processing units from the simulation target model and generates input information for the processing units from the first trace information;
a plurality of cycle accurate second instruction set simulators that perform simulation in parallel with regard to the processing units by using the input information to generate second trace information that includes more timing information than the first trace information;
a confirming unit that compares the first trace information and the second trace information with each other to detect a match portion and a mismatch portion, and
a combining unit that combines second trace information corresponding to the match portion in a time-series order.

2. The simulation device according to claim 1, further comprising:
a first trace information generating unit that is provided in place of the first instruction set simulator and generates the first trace information; and
a recording unit that records the first trace information,
wherein the first trace information generating unit is an actual machine or an FPGA corresponding to the simulation target model, and
wherein the actual machine or the FPGA inputs the first trace information from the recording unit via a scan chain.

3. The simulation device according to claim 1,
wherein the confirming unit stops detection of the match portion and the mismatch portion when detecting the mismatch portion, and
wherein the first instruction set simulator or the first trace information generating unit generates anew first trace information after the mismatch portion based on the second trace information.

4. The simulation device according to claim 1,
wherein the analyzing unit detects the processing units that are able to be processed in parallel by using a source code of the simulation target model in addition to the first trace information or in place of the first trace information.

5. The simulation device according to claim 1,
wherein the combining unit outputs the second trace information combined in a time-series order when all the first trace information and all the second trace information match with each other, as a simulation result.

6. The simulation device according to claim 1,
wherein the analyzing unit further detects a processing unit for which simulation by the second instruction set simulator is unnecessary, and
wherein the combining unit combines the first trace information of that processing unit and the second trace information with each other in a time-series order.

7. The simulation device according to claim 1,
wherein the analyzing unit further detects a processing unit for which simulation by the second instruction set simulator is unnecessary, and
wherein the second instruction set simulator, the confirming unit, and the combining unit perform no processing with regard to that processing unit.

8. A simulation system comprising:
the simulation device according to claim 1;
a modeling tool that creates the simulation target model, and
an integrated development environment unit that performs control of the simulation device or debugging.

9. A simulation method comprising:
a first simulation step of generating first trace information;
an analyzing step of detecting processing units of a simulation target model which have no mutual dependence and are able to be processed in parallel, by using the first trace information;
a dividing step of generating the processing units from the simulation target model, and generating input information for the processing units from the first trace information;
a second simulation step of performing cycle accurate simulation with regard to the processing units in parallel by using the input information, to generate second trace information that includes more timing information than the first trace information;
a confirming step of comparing the first trace information and the second trace information with each other to detect a match portion and a mismatch portion, and
a combining step of combining second trace information corresponding to the match portion in a time-series order.

10. The simulation method according to claim 9,
wherein the confirming step stops a process when detecting the mismatch portion, and
wherein the first simulation step, the analyzing step, the dividing step, the second simulation step, the confirming step, and the combining step are executed again with regard to the processing units after the mismatch portion by using the second trace information.

11. A simulation program causing a computer to perform the steps of:
generating first trace information;
detecting processing units of a simulation target model, which have no mutual dependence and are able to be processed in parallel, by using the first trace information;
generating the processing units from the simulation target model and generating input information for the processing units from the first trace information;
performing cycle accurate simulation with regard to the processing units in parallel by using the input information, to generate second trace information that includes more timing information than the first trace information;
comparing the first trace information and the second trace information with each other to detect a match portion and a mismatch portion, and
combining second trace information corresponding to the match portion in a time-series order.
